# EUROPÄISCHE PATENTSCHRIFT

(11) **EP 3 161 422 B1**
(45) Veröffentlichungstag und Bekanntmachung des Hinweises auf die Patenterteilung: **12.09.2018**
(21) Anmeldenummer: 15718438.3
(22) Anmeldetag: 31.03.2015
(51) Int. Cl.: G01D 11/30, F16C 41/00, H01F 38/14, H02J 5/00, H04B 1/16, G01D 21/00, G01L 5/00, H02J 7/02, H02J 50/10, H02J 50/12, H02J 50/80

(54) **SENSORANORDNUNG SOWIE WÄLZLAGER MIT EINER SOLCHEN**
SENSOR ARRANGEMENT AND ROLLING BEARING HAVING SUCH A SENSOR ARRANGEMENT
AGENCEMENT DE CAPTEUR ET PALIER ROTATIF ÉQUIPÉ D'UN TEL AGENCEMENT

(30) Priorität: 30.06.2014 DE 102014212530
(43) Veröffentlichungstag der Anmeldung: 03.05.2017
(73) Patentinhaber: Schaeffler Technologies AG & Co. KG, 91074 Herzogenaurach (DE)
(72) Erfinder: KEMPE, Fabian, 91074 Herzogenaurach (DE); HERBRICH, Matthias, 90766 Fürth (DE); MÜNCH, Dagmar, 60327 Frankfurt (DE)
(86) Internationale Anmeldenummer: PCT/DE2015/200226
(87) Internationale Veröffentlichungsnummer: WO 2016/000694

(56) Entgegenhaltungen:
- EP-A1- 1 927 855
- KR-A- 20130 064 872
- KR-A- 20130 067 393
- US-A1- 2006 025 897
- US-A1- 2012 175 969
- "System Description Wireless Power Transfer Volume I: Low Power", , 1. Juni 2013 (2013-06-01), Seiten 1-186, XP055093859, Gefunden im Internet: URL:http://www.wirelesspowerconsortium.com /developers/specification.html [gefunden am 2013-12-17] in der Anmeldung erwähnt

## Beschreibung

Die drahtlose Energieübertragung ist attraktiv für viele Anwendungen im Bereich der Elektronik. Es wird, basierend auf einem induktiven, kapazitiven oder elektromagnetischen Prinzip, Energie von einem Sendegerät zu einem Empfänger übertragen. Auf diese Weise können elektrische Bauteile oder elektrische Schaltungen mit einer zum Betrieb nötigen Energie versorgt werden, wenn Kabel und elektrische Kontakte nicht anwendbar sind.

Das am häufigsten angewandte Prinzip ist die induktive Energieübertragung. Typische Anwendungen sind beispielsweise Ladegeräte für Mobiltelefone, Kameras und elektrische Zahnbürsten. Aber auch für Elektrofahrzeuge, in der Medizintechnik für Implantate oder für Sensorik wird diese Form der drahtlosen Energieübertragung genutzt. Grundsätzlich ist die induktive Übertragung vor allem für Anwendungen geeignet, die einen geringen Abstand zwischen dem Sendegerät und dem Empfänger erlauben und einen niedrigen Energieverbrauch aufweisen.

Beim induktiven Energieübertragungsprinzip wird, ähnlich dem Wirkprinzip eines Transformators, in einer von Wechselstrom durchflossenen Transmitterspule ein elektromagnetisches Wechselfeld erzeugt. Durch das von einer Empfängerspule des Empfängers empfangene elektromagnetische Wechselfeld wird in der Empfängerspule eine Spannung induziert. Durch eine an die Empfängerspule angeschlossene Last kommt es durch die induzierte Spannung zu einem Stromfluss und die Leistung wird übertragen.

Aus der Praxis sind zahlreiche Verfahren und verschiedene Anwendungen der drahtlosen Energieübertragung bekannt.

Die US 2014/035383 A1 zeigt einen Dual-Mode-Empfänger zum drahtlosen Empfangen von Energie. Der Empfänger umfasst einen elektromagnetischen Resonator und eine Empfängerspule. Ein Anpassungsnetzwerk setzt sich aus passiven Komponenten zusammen. Der Aktionsradius des elektromagnetischen Resonators schließt einen ersten selektiven Niedrigfrequenzbereich und einen zweiten selektiven Hochfrequenzbereich ein, so dass eine aktive Schaltung in beiden Frequenzbereichen betreibbar ist.

Die US 2006/0199620 A1 zeigt ein Verfahren, eine Vorrichtung und ein System zur Energieübertragung. Die Vorrichtung umfasst eine Mehrzahl von Sendern, welche impulsartig Energie an einen Empfänger übertragen, um eine Last zu versorgen. Dabei benötigt der Empfänger keinen DC-DC-Wandler. Der Sender umfasst eine Antenne, die mit einem Pulsgenerator kommuniziert. Der Pulsgenerator überträgt die Impulse des Senders. Die gesendeten Stromimpulse dienen nur der Energieübertragung und nicht der Datenübertragung.

Bei Anwendungen zur Ermittlung einer physikalischen Messgröße durch Sensoren ist die drahtlose Übertragung von Daten eine häufig angewandte Alternative zu oft aufwändigen Aufbauten mit einer Verkabelung.

Die DE 100 19 539 A1 zeigt einen Sensor mit drahtloser Energieversorgung und ein Verfahren zur drahtlosen Energieübertragung. Eine Sensoreinheit weist einen Schwingkreis bestehend aus einer Kapazität und einer Spule zur Messung, zum Empfang von elektromagnetischen Wellen und zur Bildung eines Sensorsignals auf. Durch einen Umschalter oder einen Filter wird eine Auftrennung des Sensorsignals in einen Speisungsanteil und einen Nutzsignalanteil erreicht. Der Sensor wird während des Messens elektrisch mit Energie versorgt.

In der DE 10 2006 015 111 A1 ist ein Drehlager mit zwei gegeneinander beweglichen Lagerteilen gezeigt, zwischen welchen sich Schmierfett befindet. Die Schmiermitteleigenschaften werden von einem Schmiermittelsensor überwacht, der mindestens ein Piezoelement aufweist. Der Schmiermittelsensor ist über Signalübertragungsstrecken mit einer Auswertevorrichtung verbunden. Die Signalübertragung kann drahtgebunden oder über eine drahtlose Sendestrecke erfolgen. Die Sensoren sollen von einer Auswertevorrichtung mit Energie versorgt werden, jedoch ist nicht spezifiziert, wie dies bei einer drahtlosen Signalübertragung erfolgen kann.

Die US 2002/050754 A1 zeigt ein Lager mit einem berührungslosen Signalübertragungsmechanismus. Ein Ringmagnet ist an einem äußeren Ring des Lagers durch eine Magnethalteeinheit angebracht. Eine Spulenhalteeinheit mit einer Generatorspule ist an einem inneren Ring angeordnet und dem Ringmagneten zugewandt. Eine Baueinheit mit einer Sendeschaltung und einer Schleifenantenne ist mit der Spulenhalteeinheit verbunden. Die Rotation des Innenrings veranlasst den Generator zur Stromerzeugung. Die erzeugte Energie wird an eine Übertragungsschaltung geleitet. Ein Ausgangssignal eines Sensors wird durch die Übertragungsschaltung als eine energiearme Welle über die Schleifenantenne übertragen und von einer stationären Seite empfangen.

Die DE 10 2012 015 000 A1 zeigt ein elektrisches Installationsgerät mit einer Ladestation für Mobilgeräte. Eine Ladeschale umfasst eine Primär-Ladespule, die mit einer Verarbeitungs- und Ansteuereinheit an einer Stromquelle angeschlossen ist. Durch induktive Energieübertragung wird eine Sekundär-Ladespule des Mobilgeräts mit Energie versorgt.

Durch immer mehr mobile Geräte, die von wiederaufladbaren Energiequellen versorgt werden, gibt es eine Vielzahl von Ladegeräten zur drahtlosen Energieübertragung mit unterschiedlichen technischen Merkmalen. Der Verbraucher ist unkomfortabel mit dieser Vielzahl der Geräte konfrontiert, die zudem auch unterschiedliche Kabel benötigen. In Reaktion auf den sich daraus ergebenden Bedarf einer Vereinfachung bzw. eines Standards hat sich ein Firmenverbund, das Wireless Power Consortium gebildet, welcher für eine Interoperabilität von Geräten, insbesondere Ladegeräten, den sogenannten Qi-Standard entwickelt hat, dessen Einzelheiten beispielsweise veröffentlicht sind unter:
http://www.wirelesspowerconsortium.com/developers/specification.html.

Die Qi-Technologie erlaubt das drahtlose induktive Übertragen von Energie in einem Low-Power-Bereich von bis zu 5 W in einem Übertragungsfrequenzbereich von 110 Hz bis 205 Hz und einer Betriebsspannung des Senders von 19 V. Die Sende-Empfänger-Spulen sind planar ausgelegt und gegenüberliegend, typischerweise in einem Abstand von 5 mm angeordnet. Der Grundaufbau für die Qi-Technologie sieht eine Basisstation mit einer Sendespule vor, die Energie an eine Empfängereinheit mit einer Empfängerspule überträgt. Dabei ist die Empfängereinheit regelmäßig an einen Akkumulator gekoppelt, um diesen elektrisch aufzuladen. Die Empfängereinheit kommuniziert darüber hinaus unidirektional mit der Sendeeinheit über zugeordnete Überwachungseinheiten, um über eine Lastmodulation eine spezifische Leistungsanpassung vornehmen zu können.

Die EP 2 709 231 A1 zeigt ein Energieversorgungssystem für ein mit einem drahtgebundenen Netzwerk verbundenes Feldgerät. Das Energieversorgungssystem ist zur Datenkommunikation mit einer externen Einheit mit einem Funkmodul ausgerüstet. Das Funkmodul ist mit dem Feldgerät verbunden und besitzt eine Stromversorgung. Ein Stromversorgungsadapter umfasst einen Energiesender zur drahtlosen Energieübertragung. Eine Stromversorgungseinheit umfasst einen Energieempfänger, der induktiv mit dem Energiesender gekoppelt ist. Energiesender und Energieempfänger entsprechen dem Qi-Standard.

Die WO 2014/020464 A2 zeigt ein Betriebsverfahren für eine induktive Energieübertragung von einem Transmitter zu einem Empfänger über ein Leistungssignal, wobei das Energieübertragungssystem mit dem Qi- Standard kompatibel ist. Das Energieübertragungssystem sieht vor, die dem Qi-Standard entsprechende unidirektionale Kommunikation des Empfängers mit dem Transmitter zu erweitern und eine Kommunikation, ausgehend vom Transmitter, zwischen Transmitter und Empfänger zu ermöglichen. Dabei basiert die Kommunikation auf einer Lastmodulation des Leistungssignals.

Die KR 2013/0064872 A zeigt ein auf der elektromagnetischen Induktion beruhendes, drahtloses Energieübertragungssystem, welches insbesondere bei Elektrofahrzeugen oder Hybridfahrzeugen zum automatischen Laden von Batterien Verwendung findet. Das System umfasst einen Rotor, eine mit dem Außenumfang des Rotors verbundene Leistungsempfangsspule, einen mit der Leistungsempfangsspule verbundenen Leistungsempfänger, eine Leistungsübertragungsspule, welche mit Hochfrequenzleistung von der Stromversorgungseinheit gespeist und in der Rotorumgebung angeordnet ist, um Elektrizität mittels elektromagnetischer Induktion zu übertragen.

Die US 2012/175969 A1 betrifft die drahtlose Daten- und Energieübertragung, insbesondere unter rauen Umgebungen, wie beispielsweise unter Wasser. Die beschriebenen Systeme nutzen den Qi-Standard des Wireless Power Consortiums.

Die EP 1 927 855 A1 beschreibt eine Wälzlageranordnung mit einem rotierbaren Innenring, einem feststehenden Außenring und einer akustischen Emissionsmessvorrichtung. Die Messvorrichtung umfasst einen Sensor, der in eine Stirnfläche des Innenrings eingebettet ist, eine mit einer Rotationsachse und der Stirnfläche des Innenrings direkt oder über einen ersten Ferritkern indirekt verbundene erste Spule sowie eine mit dem Außenring direkt oder über einen zweiten Ferritkern indirekt verbundene zweite Spule. Erste Spule und zweite Spule sind konzentrisch zueinander angeordnet. Über die induktive Kopplung zwischen den Spulen erfolgt ein Energie- und Datenaustausch.

Die Aufgabe der vorliegenden Erfindung besteht ausgehend vom Stand der Technik darin, eine vereinfachte und preiswerte Sensoranordnung bereit zu stellen, die an einem Wälzlager realisiert werden kann, den Einsatz unterschiedlicher Sensoren sowie die Überwachung verschiedener physikalischer Größen gestattet, die Überwachung an drehbaren Teilen ermöglicht und gleichzeitig auf die Verwendung von Schleifkontakten verzichtet.

Diese Aufgabe wird durch eine Sensoranordnung gemäß dem beigefügten Anspruch 1 gelöst.

Die erfindungsgemäße Sensoranordnung ist vorzugsweise an einem Rotationslager realisiert, welches einen feststehenden Lagerteil und einen drehbaren Lagerteil umfasst. Typischerweise handelt es sich um ein Wälzlager mit Lagerinnenring, Lageraußenring und dazwischen angeordneten Wälzkörpern, andere Lagerarten sind aber nicht ausgeschlossen. Generell kann die Erfindung an allen drehbaren Teilen, die für eine Rotation gelagert sind, realisiert werden.

Am feststehenden Lagerteil bzw. verbunden mit diesem ist eine Primärspule angebracht, die drahtgebunden mit einer Versorgungseinheit verbunden ist. Die Versorgungseinheit kann unmittelbar am Lager, am Lagergehäuse oder auch entfernt davon positioniert sein. Die Versorgungseinheit liefert einen alternierenden Primärstrom an die Primärspule, sodass diese ein elektromagnetisches Wechselfeld aufbaut. Die Primärspule ist so angeordnet, dass sie das drehbare Teil umgreift, vorzugsweise konzentrisch zu diesem angeordnet ist.

Am drehbaren Teil bzw. Lagerteil sind eine Sensorschaltung und eine diese mit elektrischer Energie versorgende Sekundärspule angebracht. Die Sekundärspule befindet sich dabei im Wechselfeld der Primärspule, sodass in ihr eine Sekundärspannung induziert wird und ein die Sensorschaltung versorgender Strom fließen kann. Die Sekundärspule ist konzentrisch zur Primärspule ausgerichtet und umgreift dabei das drehbare Teil. In an sich bekannter Weise sind Stromversorgungsbauteile vorhanden, welche aus der Sekundärspannung eine für die Sensorschaltung benötigte Betriebsspannung erzeugen.

Um Kompatibilität mit verbreiteten, preiswerten Bauteilen herzustellen, sind Primärspule und Sekundärspule als Bestandteile einer Energieübertragungseinheit aufgebaut, die gemäß dem Qi-Standard arbeitet. Durch den Qi-Standard sind sowohl elektrische als auch konstruktive Parameter bestimmt, die beim Aufbau der vorliegenden Sensorschaltung eingehalten werden sollen, hier aber nicht näher beschrieben werden müssen. Besonders bevorzugt agieren Primärspule und Sekundärspule nicht nur für die Energieübertragung sondern auch für die Datenübertragung, die ebenfalls die Bedingungen des Qi-Standards berücksichtigt. Genauso denkbar sind aber auch andere Arten drahtloser Kommunikation zur Übertragung der Sensordaten vom drehbaren Lagerteil zum feststehenden Lagerteil.

Über die induktive Kopplung zwischen Primär- und Sekundärspule werden erfindungsgemäß zumindest die Betriebsenergie für die Sensorschaltung, vorzugsweise aber auch die Daten zur Kommunikation zwischen der Sensorschaltung und der Versorgungseinheit übertragen. Hinsichtlich der spezifischen zu übertragenden Daten nutzt eine bevorzugte Ausführungsform den Qi-Standard, transportiert jedoch andere Inhalte, da nicht nur die für das Laden eines Akkumulators nötigen Last- und Betriebsdaten übertragen werden. Wesentlich ist, dass die von dem Sensor am Lager aufgenommenen Messwerte drahtlos an die feststehende Versorgungseinheit übermittelt werden, um von dort aus für eine weitergehende Datenverarbeitung zur Verfügung zu stehen.

Ein wesentlicher Vorteil der Erfindung besteht darin, dass die Energieversorgung einer variablen Lagersensorik und gleichzeitig die Datenübertragung vom Sensor zu einer beliebigen Elektronik drahtlos ermöglicht sind. Die Energieversorgung erfolgt mithilfe des ausgereiften Qi-Standards, wenngleich dieser im Feld der Sensorik bislang keine Anwendung gefunden hat. Dadurch wird es möglich, kostengünstig, sicher und standardisiert Sensoriken an bewegten Lagerteilen zu platzieren.

Gemäß einer bevorzugten Ausführungsform erstreckt sich die Primärspule der Sensoranordnung entlang des Umfangs eines feststehenden Lagerrings, während sich das drehbare Lagerteil mit der daran angebrachten Sekundärspule innerhalb der Primärspule befindet. Die Primärspule kann in diesem Fall einen deutlich größeren Querschnitt aufweisen als die Sekundärspule, sodass die Energieübertragung effizient gestaltet werden kann. Bei einer rotationssymmetrischen Ausgestaltung von Primär- und Sekundärspule ist die Energie- und Datenübertragung unabhängig von der jeweiligen Winkelposition des drehbaren Lagerteils. Durch den genutzten Qi-Standard ist auch bei ruhendem drehbaren Lagerteil die Energieversorgung des Sensors sichergestellt, sodass beispielsweise vor Inbetriebnahme einer gelagerten Anordnung die Zustandsparameter des Lagers abgefragt werden können.

In einer Ausführungsform der Sensoranordnung ist das drehbare Lagerteil der Innenring eines Wälzlagers, während das feststehende Lagerteil der Außenring des Wälzlagers ist. Die Primärspule ist an der Außenseite des Außenrings angebracht, die Sekundärspule an der Innenseite des Innenrings. Die Laufflächen des Wälzlagers sind damit nicht durch die Sensoranordnung gestört. Sofern die Lagerringe aus ferromagnetischem Material bestehen, ist es zweckmäßig, einen Abstand zwischen dem Eisenmaterial und den Spulen sicherzustellen, um die von den Spulen erzeugten Wechselfelder nicht zu stark zu beeinträchtigen, da dies die Energieübertragung verschlechtert.

In nicht-erfindungsgemäßen Ausführungsformen kann die Sekundärspule an einer rotierenden Welle oder einem vergleichbaren Teil angebracht sein, während die Primärspule beispielsweise zwischen zwei Lagern m Lagergehäuse angebracht ist, um die Sekundärspule konzentrisch zu umgreifen.

Vorzugsweise sind die Sensorschaltung und die Sekundärspule auf einem flexiblen Träger angebracht, der beispielsweise eine Folie aus Polyvinylidenfluorid (PVDF) zur Realisierung des Sensors trägt. Insbesondere ist es zweckmäßig, wenn der flexible Träger an der Innenseite des Innenrings des Wälzlagers angebracht ist.

Grundsätzlich können beliebige Sensoren verwendet werden, da eine aktive Stromversorgung der Sensorschaltung möglich ist. Damit lassen sich durch bekannte Sensoren beispielsweise Kräfte, Verschleißwerte, Drehzahlen, Temperaturen, Viskositäten des Schmiermittels oder andere die Betriebsfähigkeit des Lagers beeinflussende Parameter überwachen. Gemäß einer Ausführungsform umfasst die Sensorschaltung einen Dehnungssensor, welcher auf dem flexiblen Träger aufgebracht ist.

Es ist zweckmäßig, wenn die Versorgungseinheit einen ersten Mikroprozessor umfasst, der die Primärspannung an die Primärspule liefert und damit die Bereitstellung der Versorgungsenergie steuert. Bevorzugt prägt die Versorgungseinheit dem in die Primärspule eingespeisten Primärstrom außerdem alle Steuerdaten ein, die an die Sensorschaltung übertragen werden sollen. Beispielsweise können diese Steuerdaten eine ID-Adresse des jeweiligen Sensors enthalten, insbesondere wenn der Sensorschaltung mehrere Sensoren zugeordnet sind. Weiterhin können Kalibrierungsdaten oder Daten externer Einheiten übertragen werden, wenn dies für den ordnungsgemäßen Betrieb der Sensorschaltung bzw. die Auswertung der vom Sensor gelieferten Messwerte benötigt wird. Die Versorgungseinheit beobachtet außerdem eine in der Primärspule auftretende Gegeninduktion, die ausgelöst wird von einem sich ändernden Sekundärstrom, welcher der Sekundärspule eingeprägt wird und die Antwortdaten von der Sensorschaltung repräsentiert. Die Versorgungseinheit filtert diese Antwortdaten heraus und stellt sie für eine nachfolgende Verarbeitung zur Verfügung. Für diese Datenübertragung werden vorzugsweise die Vorgaben des Qi-Standards berücksichtigt, jedoch könen auch andere bekannte Formen der drahtlosen Kommunikation angewendet werden.

Gemäß einer bevorzugten Ausführungsform besitzt die Sensorschaltung einen zweiten Mikroprozessor, welcher die vom Sensor gelieferten Messwerte verarbeitet und die bereits erwähnten Antwortdaten in Form eines datenmodulierten Sekundärstroms an die Sekundärspule liefert.

Die vor der Erfindung stehende Aufgabe wird außerdem durch ein Wälzlager gemäß dem nebengeordneten Anspruch 10 gelöst. Das Wälzlager besitzt einen feststehenden und einen drehbaren Lagerteil sowie weiterhin die zuvor erläuterte Sensoranordnung.

Weitere Vorteile und Einzelheiten der Erfindung ergeben sich aus der nachfolgend beschriebenen Ausführungsform, unter Bezugnahme auf die beigefügte Zeichnung.

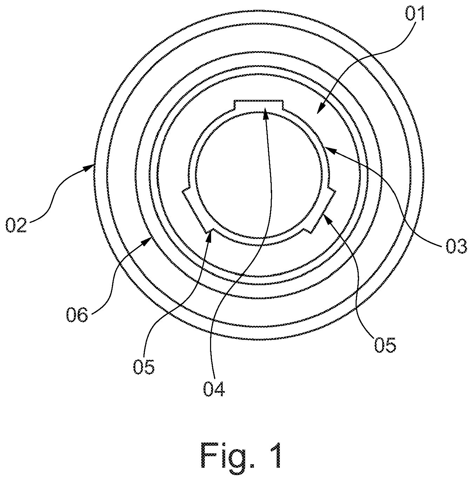

- Fig. 1: zeigt eine prinzipielle Querschnittsdarstellung eines in einem Fahrradtretlager angeordneten Wälzlagers mit einer erfindungsgemäßen Sensoranordnung.

Fig. 1 zeigt im Querschnitt ein Wälzlager 01, welches Bestandteil eines Fahrradtretlagers ist. Das Fahrradtretlager ist in einem Rahmenrohr 02 angeordnet. An der Innenseite eines Innenrings des Wälzlagers 01 ist ein flexibler Träger 03 angebracht. Der Träger 03 stellt eine Fläche für die Ausbildung eines oder mehrerer Sensoren bereit, beispielsweise für einen Dehnungssensor und einen Temperatursensor, welche die am Lagerinnenring auftretenden mechanischen Spannungen sowie die Temperatur bestimmen. Die Sensoren sind über auf dem Träger 03 ausgebildete elektrische Leiter mit weiteren Bauelementen zu einer Sensorschaltung zusammengeschaltet. Die weiteren Bauelemente sind hier auf einem Leiterplattensteg 04 angeordnet.

Am Träger 03 sind außerdem zwei Stützstege 05 abgebracht. Schließlich trägt der Träger 03 eine Sekundärspule (nicht dargestellt), welche mit einem in ihr erzeugten Strom die Sensorschaltung mit der benötigten Energie versorgt. Die Sensorschaltung liefert außerdem Antwortdaten an die Sekundärspule für eine drahtlose, induktive Datenübertragung an eine Primärspule 06, die auf der Außenseite des feststehenden Außenrings des Wälzlagers angeordnet ist.

Die Primärspule 06 ist mit einer Versorgungseinheit (nicht dargestellt) elektrisch verbunden und wird von dieser gespeist. Primärspule 06 und Sekundärspule sind somit Bestandteil einer Energie- und Datenübertragungseinheit, die gemäß dem Qi-Standard aufgebaut ist. Durch Ausnutzung der im Qi-Standard näher definierten Induktionskopplung wird die für die Sensorschaltung benötigte Energie von der Primärspule an die Sekundärspule übertragen. Außerdem erfolgt eine bidirektionale Datenübertragung zwischen diesen beiden Spulen in der oben beschriebenen Art und Weise.

### Bezugszeichenliste

- 01: Wälzlager
- 02: Rahmenrohr
- 03: flexibler Träger
- 04: Leiterplattensteg
- 05: Stützstege
- 06: Primärspule

## Patentansprüche

1. Sensoranordnung mit einem feststehenden Außenring eines Wälzlagers, an welchem eine Primärspule (06) angebracht ist, die drahtgebunden mit einer Versorgungseinheit verbunden ist, und mit einem drehbaren Innenring des Wälzlagers, an welchem eine Sensorschaltung und eine diese mit elektrischer Energie versorgende Sekundärspule angebracht sind, wobei die Sekundärspule konzentrisch innerhalb der Primärspule angeordnet ist, und wobei über die induktive Kopplung zwischen Primär- und Sekundärspule mindestens die Betriebsenergie für die Sensorschaltung übertragen wird, **dadurch gekennzeichnet, dass** die Primärspule (06) den Innenring ringförmig umgreift, dass Primär- und Sekundärspule Bestandteil einer Energieübertragungseinheit sind, die gemäß dem Qi-Standard arbeitet, und dass die Primärspule (06) an der Außenseite des Außenrings angebracht ist.

2. Sensoranordnung nach Anspruch 1, **dadurch gekennzeichnet, dass** über die induktive Kopplung zwischen Primär- und Sekundärspule auch die Daten zur Kommunikation zwischen der Sensorschaltung und der Versorgungseinheit übertragen werden.

3. Sensoranordnung nach Anspruch 1 oder 2, **dadurch gekennzeichnet, dass** die Sensorschaltung und die Sekundärspule auf einem flexiblen Träger angebracht sind, welcher mit dem Innenring verbunden ist.

4. Sensoranordnung nach Anspruch 3, **dadurch gekennzeichnet, dass** der flexible Träger an der Innenseite des Innenrings angebracht ist.

5. Sensoranordnung nach Anspruch 4, **dadurch gekennzeichnet, dass** die Sensorschaltung einen Dehnungssensor umfasst, welcher auf dem flexiblen Träger aufgebracht ist.

6. Sensoranordnung nach einem der Ansprüche 1 bis 5, **dadurch gekennzeichnet, dass** die Versorgungseinheit einen ersten Mikroprozessor umfasst, der die Bereitstellung von Versorgungsenergie an die Primärspule (06) steuert, dem in die Primärspule (06) eingespeisten Strom Steuerdaten einprägt, die in der Primärspule (06) auftretende Gegeninduktion überwacht und Antwortdaten von der Sensorschaltung verarbeitet.

7. Sensoranordnung nach einem der Ansprüche 1 bis 6, **dadurch gekennzeichnet, dass** die Sensorschaltung einen zweiten Mikroprozessor umfasst, welcher die vom Sensor gelieferten Messwerte verarbeitet und Antwortdaten an die Sekundärspule liefert.

8. Wälzlager (01) mit einem feststehenden Außenring und einem drehbaren Innenring, **dadurch gekennzeichnet, dass** es weiterhin eine Sensoranordnung gemäß einem der Ansprüche 1 bis 7 umfasst.

## Claims

1. Sensor arrangement having a fixed outer ring of a roller bearing to which a primary coil (06) is attached, which primary coil is connected in wired fashion to a power supply unit, and having a rotatable inner ring of the roller bearing to which a sensor circuit and a secondary coil that supplies electrical energy to said sensor circuit are attached, wherein the secondary coil is arranged concentrically within the primary coil, and wherein at least the operating energy for the sensor circuit is transmitted by means of the inductive coupling between the primary and secondary coil, **characterized in that** the primary coil (06) engages around the inner ring in annular fashion, **in that** the primary and secondary coil are constituent parts of an energy transmission unit operating in accordance with the Qi standard, and **in that** the primary coil (06) is attached to the outer side of the outer ring.

2. Sensor arrangement according to Claim 1, **characterized in that** the data for communication between the sensor circuit and the power supply unit are also transmitted by means of the inductive coupling between the primary and secondary coil.

3. Sensor arrangement according to Claim 1 or 2, **characterized in that** the sensor circuit and the secondary coil are mounted on a flexible carrier, which is connected to the inner ring.

4. Sensor arrangement according to Claim 3, **characterized in that** the flexible carrier is attached to the inner side of the inner ring.

5. Sensor arrangement according to Claim 4, **characterized in that** the sensor circuit comprises a strain sensor, which is mounted on the flexible carrier.

6. Sensor arrangement according to one of Claims 1 to 5, **characterized in that** the power supply unit comprises a first microprocessor, which controls the provision of supply energy to the primary coil (06), impresses control data on the current fed into the primary coil (06), monitors the inductive coupling arising in the primary coil (06) and processes response data of the sensor circuit.

7. Sensor arrangement according to one of Claims 1 to 6, **characterized in that** the sensor circuit comprises a second microprocessor, which processes the measurement values delivered by the sensor and delivers response data to the secondary coil.

8. Roller bearing (01) having a fixed outer ring and a rotatable inner ring, **characterized in that** said roller bearing also comprises a sensor arrangement according to one of Claims 1 to 7.

## Revendications

1. Configuration de capteur avec une bague extérieure stationnaire d'un roulement, sur laquelle est montée une bobine primaire (06) qui est reliée par connexion filaire avec une unité d'alimentation et avec une bague intérieure rotative du roulement, sur laquelle sont placés un circuit de capteur et une bobine secondaire alimentant ce dernier en énergie, la bobine secondaire étant placée de manière concentrique à l'intérieur de la bobine primaire et par l'intermédiaire du couplage inductif entre la bobine primaire et la bobine secondaire, au moins l'énergie de service pour le circuit de capteur étant transmise, **caractérisée en ce que** la bobine primaire (06) entoure en forme annulaire la bague intérieure, **en ce que** la bobine primaire et la bobine secondaire sont partie intégrante d'une unité de transmission d'énergie qui fonctionne selon le standard Qi, et **en ce que** la bobine primaire (06) est montée sur la face extérieure de la bague extérieure.

2. Configuration de capteur selon la revendication 1, **caractérisée en ce que** par l'intermédiaire du couplage inductif entre la bobine primaire et la bobine secondaire sont également transmises les données pour la communication entre le circuit de capteur et l'unité d'alimentation.

3. Configuration de capteur selon la revendication 1 ou 2, **caractérisée en ce que** le circuit de capteur et la bobine secondaire sont montés sur un support flexible, lequel est relié avec la bague intérieure.

4. Configuration de capteur selon la revendication 3, **caractérisée en ce que** le support flexible est monté sur la face intérieure de la bague intérieure.

5. Configuration de capteur selon la revendication 4, **caractérisée en ce que** le circuit de capteur comprend un capteur de dilatation, lequel est monté sur le support flexible.

6. Configuration de capteur selon l'une quelconque des revendications 1 à 5, **caractérisée en ce que** l'unité d'alimentation comprend un premier microprocesseur, qui commande la mise à disposition d'énergie d'alimentation pour la bobine primaire (06), imprime au courant alimenté dans la bobine primaire (06) des données de commande, supervise la réactance inductive produite dans la bobine primaire (06) et traite des données de réponse du circuit de capteur.

7. Configuration de capteur selon l'une quelconque des revendications 1 à 6, **caractérisée en ce que** le circuit de capteur comprend un deuxième microprocesseur, lequel traite les valeurs mesurées fournies par le capteur et fournit des données de réponse à la bobine secondaire.

8. Roulement (01), doté d'une bague extérieure stationnaire et d'une bague intérieure rotative, **caractérisé en ce qu'**il comprend par ailleurs une configuration de capteur selon l'une quelconque des revendications 1 à 7.
